(19) Europäisches Patentamt
European Patent Office
Office européen des brevets

(11) EP 2 999 606 B1

(12) **EUROPÄISCHE PATENTSCHRIFT**

(45) Veröffentlichungstag und Bekanntmachung des Hinweises auf die Patenterteilung:
**17.01.2018 Patentblatt 2018/03**

(51) Int Cl.:
***B60M 1/28*** *(2006.01)* ***G01B 11/02*** *(2006.01)*

(21) Anmeldenummer: **14721844.0**

(22) Anmeldetag: **05.05.2014**

(86) Internationale Anmeldenummer:
**PCT/EP2014/059039**

(87) Internationale Veröffentlichungsnummer:
**WO 2014/187658 (27.11.2014 Gazette 2014/48)**

(54) **VERFAHREN ZUR OPTISCHEN FAHRDRAHTSTÄRKENMESSUNG EINER OBERLEITUNG DES SCHIENENVERKEHRS**

METHOD FOR OPTICALLY MEASURING THE CONTACT WIRE THICKNESS OF A RAILWAY CATENARY

PROCÉDÉ DE MESURE OPTIQUE DE L'ÉPAISSEUR DU FIL DE CONTACT D'UNE LIGNE DE CONTACT AÉRIENNE UTILISÉE POUR LE TRAFIC FERROVIAIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.05.2013 DE 102013008600**

(43) Veröffentlichungstag der Anmeldung:
**30.03.2016 Patentblatt 2016/13**

(73) Patentinhaber: **DB Netz AG**
**60329 Frankfurt (DE)**

(72) Erfinder: **MAUS, Paul**
**58455 Witten (DE)**

(74) Vertreter: **Zinken-Sommer, Rainer et al**
**Deutsche Bahn AG**
**HLM 4 - Patentabteilung**
**Richelstrasse 3**
**80634 München (DE)**

(56) Entgegenhaltungen:
**WO-A2-2009/153526          JP-A- H09 189 523**
**JP-A- H09 240 327          KR-A- 20130 034 322**

**Beschreibung**

Die Erfindung betrifft ein Verfahren zur optischen Fahrdrahtstärkenmessung einer Oberleitung des Schienenverkehrs, wobei der Fahrdraht in seinem oberen Bereich beidseitig eine Aufnahme für eine Hängerklemme aufweist und in seinem unteren Bereich halbkreisförmig ausgebildet ist sowie einen Abnutzungsbereich im Fahrdrahtspiegel aufweist, dessen Ausprägung gemessen wird.

Bei der Ermittlung der Fahrdrahtstärke von Oberleitungsanlagen der 2. Ordnung (Nebengleise in Bahnhöfen usw.) werden diese bei Instandhaltungsarbeiten manuelle nachgemessen. Dies geschieht momentan durch die Anwendung einer Mikrometerschraube.

Dabei treten folgende Problemstellungen auf:

1. Die Oberleitung muss ausgeschaltet und geerdet werden, da es sich um eine berührende Messung handelt.
2. Der Höhenunterschied von 4,95 m bis 6 m mussüberwunden werden. Dafür werden Hilfsmittel wie Leitern oder Instandhaltungsfahrzeuge (Turmtriebwagen (TVT)) verwendet.

Aus den oben genannten technischen Problemstellungen
folgen die bahnbetrieblichen Problemstellungen:

- Durch das Ausschalten der Oberleitung und durch das Besetzen des Gleises ist die weitere Nutzung der Strecke für den Bahnbetrieb ausgeschlossen,
- Da die momentane manuelle Messmethode ein direkter Eingriff in den Bahnbetrieb und in die elektrische Betriebsführung darstellt, hängt dies meistens mit einer BETRA aus organisatorischer Sicht zusammen.

Das Ziel ist es:

- die Oberleitung bei der manuellen Fahrdrahtstärkenermittlung eingeschaltet zu lassen,
- den Eingriff in den Bahnbetrieb so gering wie möglich zu halten,
- mögliche Störquellen, welche durch Oberleitungsbauelemente entstehen, durch die direkte Messung der Abnutzungsfläche (Spiegelfläche) auszuschalten.

Die Ermittlung der Abnutzung eines Fahrdrahts, mit Hilfe eines optischen Verfahrens, basiert auf der Spiegelflächenmessung, welches unterhalb des zu messenden Objektes durchgeführt wird. Bei dieser Messmethode ist man von einer geraden sukzessiven Abnutzung ausgegangen.

Da das Kettenwerk der Oberleitung ein dynamisches System ist und der Stromabnehmer der E-Loks, je nach Lage des Fahrdrahts, sich entgegenneigt, wird dadurch ein schräger Fahrdrahtspiegel erzeugt. Dies hat für das Messverfahren bestimmte Auswirkungen bei der optischen Ermittlung der Spiegelfläche:

1. Die gemessene Abnutzungsfläche wird zu gering angenommen. Dies hat zur Folge, dass die Fahrdrahtstärke falsch bestimmt wird.
2. Die optische Unterstützung der Laserlinie wird durch den Versatz, in die Richtung des schrägen Verlaufs gebrochen und kann für die gerade Messung, je nach Stärke der Abnutzung, nicht einwandfrei für diese Art von Messung genutzt werden.

Aus der DE 10 2007 063 490 A1 ist eine Messeinrichtung zur Bestimmung der Stärke von Fahrleitungen für elektrisch betriebene Schienenfahrzeuge und zur Erfassung von Bauelementen an den Fahrleitungen mit einem optischen Sensor und einem optischen Empfänger sowie mit einer Auswerteeinheit bekannt. Hierfür wird eine Schleifleiste für die Ergänzung eines definierten Abstandes zwischen Kamera und Fahrdraht verwendet. Dadurch wird es eine berührende Messung mit allen diesbezüglichen Nachteilen. Die Messeinrichtung weder die Seitenlage hoch die Fahrdrahthöhe vermessen.

Die DE 201 14 200 U1 beschreibt eine Vorrichtung zum Messen der Stärke des Fahrdrahtes einer Oberleitung, wobei eine an sich bekannte Isolierstange bzw. Erdungsstange eine mechanisch wirkende und von einer im Gleisbereich stehenden Person bestätigbare Messeinrichtung aufweist. Auch diese Vorrichtung führt eine berührende Messung mittels mechanisch wirkender Tastmesser durch und ist nur für eine Fahrdrahtstärkenmessung einsetzbar.

Bekannt ist eine Messvorrichtung zur Bestimmung der Stärke, der Seiten- und der Höhenlage von Fahrleitungen sowie zur Erfassung von Stößen an Fahrleitungen für elektrisch betriebene Schienenfahrzeuge, die mit einem rohrförmigen Ausleger zur mit seinem unteren Ende zusammen mit Wegaufnehmern zur Erfassung der horizontalen und vertikalen Schwenkung des Auslegers auf dem Dach des Schienenfahrzeuges befestigt ist (DE 198 03 553 C2). Die Vorrichtung weist zudem einen optischen Sender und einen optischen Empfänger und eine zugehörige Auswerteeinheit auf. Es handelt sich ebenfalls um eine berührende Messung, wobei eine Schattenmessung mittels Laserstrahl durchgeführt wird, welcher zuerst als Linienlaser umgewandelt wird und den Fahrdraht einseitig anstrahlt. Die Auswertung erfolgt per CCD-Sensoreinheit. Im Rahmen der Schattenmessung entstehen Störquellen durch Oberleitungsbauelemente (Hängerklemmer, Kreuzstäbe u. ä.), was nachteilig für die Messqualität und Genauigkeit ist.

Weiterhin ist ein Messgerät zur Ermittlung der Stärke von spannungsführenden Fahrdrähten bei elektrisch angetriebenen Fahrzeugen, insbesondere Schienenfahrzeugen bekannt, wobei der Meßkopf eine ein quasiparalleles Strahlenbündel erzeugende Lichtquelle und eine den Fahrdraht in den Strahlengang positionierende Fahrdrahtaufnahmevorrichtung, sowie eine das Schattenbild aufnehmende Kamera aufweist und der Kamera zur Übermittlung der aufgenommenen Signale über Lichtwellenleiter ein Auswerterechner nachgeschaltet ist (DE 940 24 650 U1).

Dieses Messgerät führt ebenfalls eine berührende Messung mittels eines Messgestells durch. Gemessen werden kann ausschließlich die Fahrdrahtstärke auf freien Strecken und nicht in Bahnhofsbereichen oder auf Nebengleisen.

Da das Kettenwerk der Oberleitung ein dynamisches System ist und der Stromabnehmer der E-Loks, je nach Lage des Fahrdrahts, sich entgegenneigt, wird dadurch ein schräger Fahrdrahtspiegel erzeugt. Dies hat für Messverfahren bestimmte Auswirkungen bei der optischen Ermittlung der Spiegelfläche, wenn der Blickwinkel von 20° überschritten wird:

1. Die gemessene Abnutzungsfläche wird zu gering angenommen. Dies hat zur Folge, dass die Fahrdrahtstärke falsch bestimmt wird.
2. Die optische Unterstützung der Laserlinie wird durch den Versatz, in die Richtung des schrägen Verlaufs, gebrochen und kann für die gerade Messung, je nach Stärke der Abnutzung, nicht einwandfrei für diese Art von Messung genutzt werden.

Die JP 09189523 A beschreibt ein Verfahren zur Aufnahme eines Fahrdrahtes über eine Kamera, wobei in der Optik der Kamera mehrere Kollimationslinien abgebildet werden, welche auf dem angeschlossenen Ausgabegerät (Bildschirm) längs zum Fahrdraht ausgegeben werden. Durch dieses Verfahren wird die Sehne messtechnisch ermittelt. Der Wert wird anschließend in die vorhandene Formel eingesetzt, um den restlichen Durchmesser zu errechnen.
Bei einer schrägen Abnutzung des Fahrdrahtes müssen mehrere Werte einzeln erfasst werden, um die Abnutzungsfläche zu ermitteln und somit auf den restlichen Durchmesser schließen zu können. Das Verfahren ist umständlich und ungenau.

In der JP 07280528 A wird eine mechanische Messeinrichtung mit einem CCD-Baustein beschrieben, wobei eine Schattenmessung durchgeführt wird. Dabei wird der seitliche Schattenwurf der Oberleitung erfasst und ausgewertet. Das Ergebnis ist der restliche Durchmesser. Da es eine seitliche Betrachtung zum Messobjekt ist, stellt jede im Fahrdraht befindliche Hängerklemme oder ein Oberleitungsbauelement eine Stör-quelle für Messwertverfälschungen dar. Darüber hinaus wird der Messaufbau direkt an die Oberleitung herangeführt, sodass es zu einer berührenden Messung führt.

Die WO 2009/153 526 A2 betrifft ein Verfahren und ein System zur Messung des Verschleißes eines Oberleitungsdrahtes einer Eisenbahnschiene und eines Schienenfahrzeugs mit einem solchen System. Es wird ein elektromagnetisches Feld durch einen Induktor in unmittelbarer Nähe zu einem Oberleitungsdraht erzeugt. Dieses elektromagnetische Feld wird durch den Oberleitungsdraht gestört. Magnetfelddetektoren befinden sich in unmittelbarer Nähe zum Oberleitungsdraht und detektiert das durch den Oberleitungsdraht gestörte elektromagnetische Feld. Der Verschleiß und die Lage des Oberleitungsdrahtes werden auf der Grundlage der Störung des elektromagnetischen Felds und eines vorgegebenen Darstellungsmodells berechnet. Das Verfahren ist sehr ungenau.
Weiterhin sind die JP H09 240327 A und die KR 2013 0034322 A bekannt.

Der Erfindung liegt die Aufgabe zugrunde, ein optisches Messverfahren zu entwickeln, welches es gestattet, auch schräge Abnutzungen eines Fahrdrahtes exakt zu bestimmen, wobei ein berührungsloses Messverfahren zum Einsatz kommen soll, welches die Fahrdrahtstärke, die Seitenlage und die Höhe des Fahrdrahtes speziell in Bahnhofs- und Nebengleisbereichen ermittelt.

Dies wird erfindungsgemäß durch Patentanspruch 1 erreicht.

Als zulässiger Wert der Abnutzung des Fahrdrahtspiegels wird ein Wert von 20% eingestellt.

Die eingesetzte Laser-Kamera wird mit einem Gleislot kombiniert, welches die Ausrichtung der Laser-Kamera gewährleistet und zur Überprüfung der Seitenlage eingesetzt wird.

Zusätzlich zur Laser-Vermessung des Fahrdrahtes und zur Seitenlagemessung wird die Fahrdrahthöhe mittels eines Vermessungslasers gemessen.

Die Laser-Kamera, die Auswerteeinheit und das Gleislotwerden auf einem Gestell moniert.

Die Auswerteeinheit wird mit einem GPS-Empfänger und einem Auswertebildschirm verbunden. Das Gestell wird schienenfahrbar ausgeführt.

Die Ermittlung einer schrägen Fahrdrahtspiegelfläche wird mittels der Beziehung

$$D_{Rest} = r + 0,5 \sqrt{4r^2 - \left(\sqrt{FpS^2 + hx^2} + hx\right)^2}$$

durchgeführt, wobei

r - Radius des Fahrdrahtes
FpS - gemessener Fahrdrahtspiegel bei einer geraden Abnutzung
hx - gesuchte Steigung der realen Abnutzungsfläche bedeuten.

Die Ermittlung der gesuchten Höhe hx wird mittels einer Messkreuzschablone durchgeführt, die bei einer Abweichung von mehr als 1% vom Durchmesser oder bei einem Blickwinkel von > 20° und einer Steigung von hx von max. 0,2 mm die Messkreuzschablone für die Messung verwendet wird.

Zur Messung einer schrägen Abnutzung des Fahrdrahtspiegels wird der Fahrdraht verdreht und dann vermessen sowie anschließend unter Verwendung der Erweiterung durch die Messkreuzschablone ausgewertet.

Durch den eingesetzten Laser wird eine Laserlinie auf dem Abnutzungsbereich des Fahrdrahtes erzeugt und er dadurch als optische Unterstützung zur Messschablone verwendet wird.

Die eingesetzten Laservorrichtungen, sowie die eingesetzte Kamera werden auf einen zum Gleislot angepassten Vermessungsschlitten montiert.

Vorteile der Erfindung:

- exakte Ermittlung der Fahrdrahtstärke, der Seitenlage und der Höhe des Fahrdrahtes mit einem Messverfahren mittels einer berührungslosen Messung
- Messung von Fahrdrähten in Oberleitungsbereichen von Bahnhöfen und Nebengleisen (Oberleitung 2. Ordnung) möglich
- kein Messfahrzeug notwendig, sondern nur Gleisgestell
- das Verfahren kann weitgehend automatisiert werden
- sehr hohe Messgenauigkeit durch Verwendung eines Linearlasers und eines Vermessungslasers
- schnell und einfache Erreichung von schwer zugänglichen Gleisen in Bahnhofsbereichen
- Oberleitungsbauelemente oder doppelt verlaufende Fahrdrähte (in Weichenbereichen) wirken sich nicht negativ auf die Messung aus, weil die direkte Abnutzung am Fahrdraht gemessen wird.

**Ausführungsbeispiel**

Die Erfindung soll nachfolgend anhand eines Ausführungsbeispiels näher erläutert werden. Dabei zeigen:

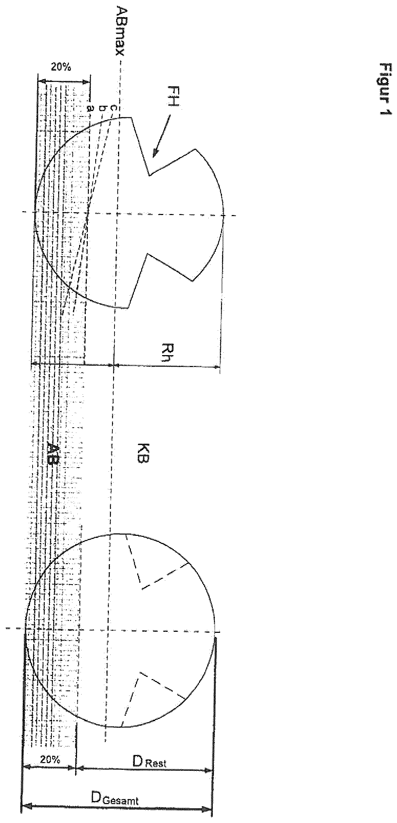

- Figur 1 - Abnutzungsbereich des Fahrdrahtes

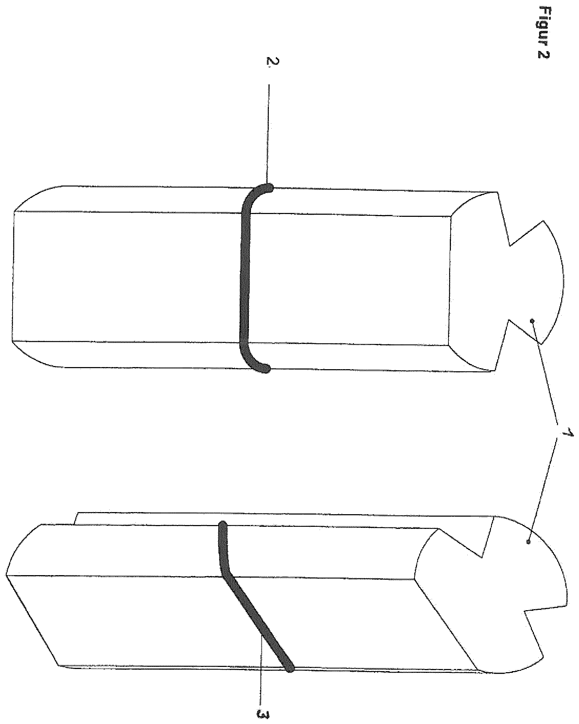

- Figur 2 - unterschiedlicher Laserverlauf nach Lage des Fahrdrahtes

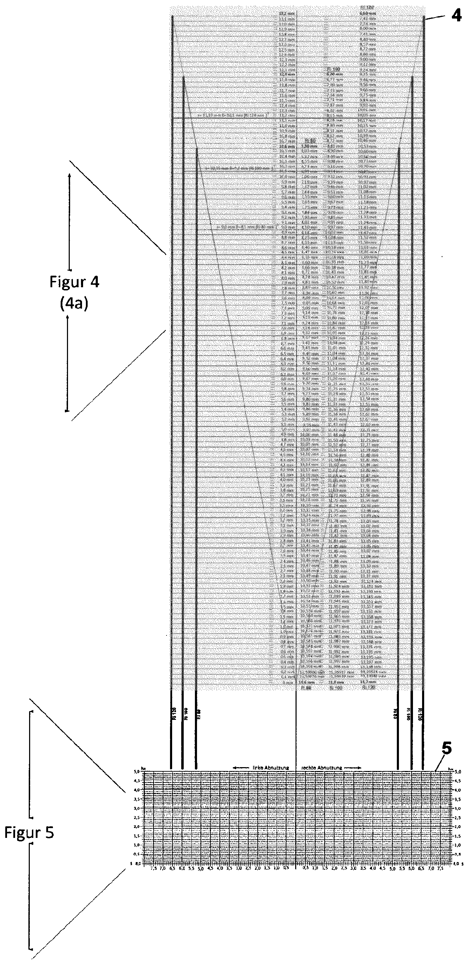

- Figur 3 - Messschablone
- Figur 4 - Auswertung bei gerader Betrachtung

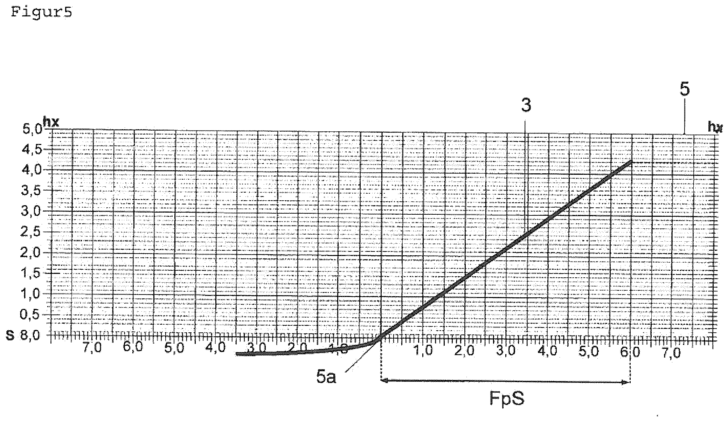

- Figur 5 - Auswertung bei schräger Betrachtung

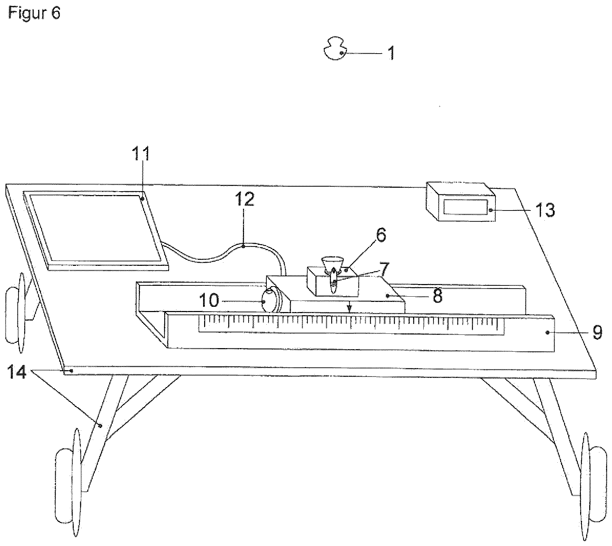

- Figur 6 - Messgestell mit Messvorrichtung
- Figur 7 - Gleislot mit Kamera und Linienlaser
- Figur 8 - Ausrichtung Messschlitten und Laser auf Fahrdraht

Die Grundform eines Fahrdrahts ist ein Kreis, der wiederum in zwei Bereiche aufgeteilt ist:

1. Der Klemmbereich für die Fahrdrahthalterung
2. Der Stromabnehmerbereich

(Figur 1)

Der untere Bereich in der Abbildung bezieht sich in diesem Fall auf eine gerade Abnutzung (a) von 20%des gesamten Querschnitts. In diesem Bereich kommt es zur Fahrdrahtspiegelbildung. Der Winkel, welcher die Strecken (a), (b) und (c) darstellt, stellt somit gleichzeitig den größten Fahrdrahtspiegel bei einer 20%igen Abnutzung dar. Bei einer kontinuierlichen Abnutzung entsteht somit je nach Abnutzungswinkel eine Spiegelfläche (Sehne).

Diese Sehne kann durch die Messschablone (4) mit der optischen Unterstützung des Linienlasers (10) ermittelt werden. Dabei wird auf dem Fahrdraht (1) der Laserverlauf je nach Lage der Abnutzung reflektiert.

(Figur 2)

Wie in der oberen Abbildung ersichtlich werden die unterschiedlichen Laserbeugungen, je nach Blickwinkel, dargestellt. Für die gerade Messung der Abnutzungsfläche, bis zu einem Blickwinkel < 20°, wird die erfindungsgemäße Messschablone (4) verwendet.

(Figur 3)

Das Messkreuz zur Ermittlung von schrägen Abnutzungen befindet unterhalb der eigentlichen Messschablone (4). Auf der Messschablone finden alle Messungen (bis zu einem Abnutzungswinkel von 20°) statt. Dies wird in der oberen Abbildung in ihrer Gesamtheit dargestellt.

Die Messschablone (4) zur Ermittlung von $D_{Rest}$ bei gerader Abnutzung:

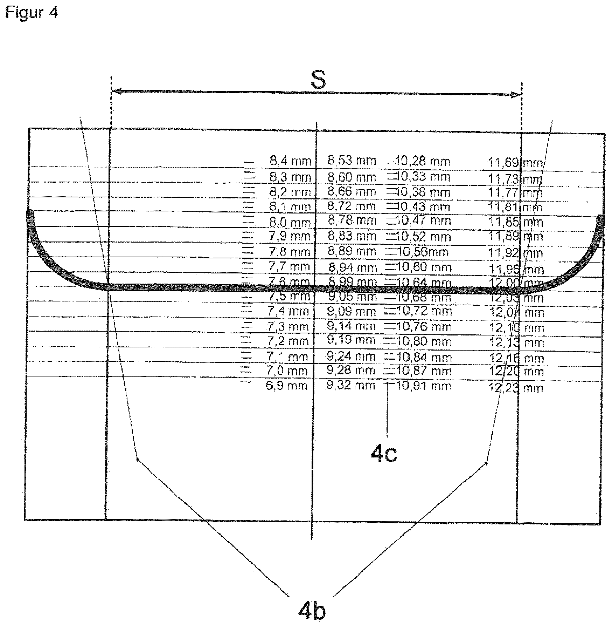

Bei der geraden Abnutzung, Blickwinkel < 20°, wird ein beidseitiger Schnittpunkt zwischen dem Beginn der Laserbeugung und den Spiegelflächenbegrenzungslinien (4b) an der Messschablone hergestellt. Die Gerade zwischen beiden Schnittpunkten bildet die tatsächliche Abnutzungsfläche (S) des Fahrdrahtes (1), welche die lineare Größe der Messschablone (4) vorgibt. Die Figur 4 verdeutlicht dies, indem ein Ausschnitt von der Messschablone (4a) dargestellt wird.

(Figur 4)

Je nach Fahrdrahttypen lässt sich die zugehörige Fahrdrahtstärke mit der Messschablone (4) bestimmen.

Die Messschablone (4) zur Ermittlung von $D_{Rest}$ bei schräger Abnutzung:

Da der Blickwinkel für die FpS-Messmethode sich unterhalb der Oberleitung befindet, wurde erfindungsgemäß ein trigonometrischer Lösungsansatz gefunden, welcher den Abnutzungswinkel beinhaltet. Die nachfolgende Abbildung verdeutlicht den trigonometrischen Lösungsansatz bei einer schrägen Abnutzung mit Hilfe einer Parallel-Projektion:

$$D_{Res} = r + 0{,}5 \sqrt{4r^2 - Sx^2}$$

$$D_{Res} = r + 0{,}5 \sqrt{4r^2 - \left(\sqrt{FpS^2 + hx^2} + hx\right)^2} \qquad Sx = \sqrt{FpS^2 + hx^2} + hx$$

Wie in der letzten Abbildung ersichtlich, wird die gesuchte Abnutzungsfläche (Sx) durch ein rechtwinkliges parallel verschobenes Dreieck ermittelt. Die Katheten bilden sich aus zwei messbaren Werten:

- FpS - Diese Seite stellt den gemessenen Fahrdrahtspiegel bei einer geraden Abnutzung dar. Sie wird mit der M-Schablone messtechnisch ermittelt.
- hx - Ist die gesuchte Steigung der realen Abnutzungsfläche. Genau wie der FpS-Wert,wird dieser durch das Messkreuz (5) messtechnisch erfasst.

Wenn beide Werte durch die M-Schablone und dessen Erweiterung bekannt sind, dann kanndadurch die resultierende Fahrdrahtstärke ($D_{Rest}$) durch eine Parallelverschiebung um (hx)berechnet werden.

Zum mathematischen Beleg, wird folgende Berechnung durchgeführt:

Geg.: Ri100mm2 (r= 6mm , D=12mm)
FpS = 4,1mm; hx = 0,9mm

$$S_x = \sqrt{4{,}1^2 + 0{,}9^2} + 0{,}9 = 5{,}0976 \, mm$$

$$D_{Res} = 6 + 0{,}5 \sqrt{4 \cdot 6^2 - 5{,}0976^2} = 11{,}4317 \, mm$$

Bei einer geraden Messung würde sich folgender Durchmesser ergeben:

$$D_{Res} = 6 + 0{,}5 \sqrt{4 \cdot 6^2 - 4{,}1^2} = 11{,}6389 \, mm$$

Die Berechnung verdeutlicht, dass die gemessene Spiegelfläche und die daraus resultierende Fahrdrahtstärke vom Abnutzungswinkel abhängig ist. In der oben aufgeführten Berechnung handelt es sich um eine Abnutzung bei einem Blickwinkel von 41,2° und bei einer angenommen Höhe (hx) von 0,9 mm.
Blickwinkel:

$$\alpha = \frac{180°}{\pi} \sin\left(\frac{4,1\,mm}{5,0976\,mm}\right) = 41,2°$$

Erfindungsgemäß wird das bestehende Messverhalten durch das FpS-Verfahren hinsichtlich der zu messenden Höhe (hx) erweitert.

Die Erweiterung des FpS für schräge Messungen:

In dem letzten Abschnitt ist die Problemlösung für die schräge Abnutzungsflächen mit Hilfe der mathematischen Grundlagen geschaffen worden. Die daraus resultierenden Erkenntnisse werden mit dem bestehenden FpS-Messsystem kombiniert. Dies bedeutet, dass die Höhenermittlung von (hx) in die M-Schablone implementiert werden muss. Dafür muss erst einmal der mögliche maximale Winkel einer schrägen Abnutzung ermittelt werden. Die reguläre maximale Fahrbahn-Erhöhung nach EBO beträgt 150mm in einem Bogen.

Somit lässt sich folgende Überlegung auf der nachfolgenden Seite anstellen:

Maximale Überhöhung nach EBO

In der Abbildung ist die maximale Fahrbahnerhöhung und dessen maximaler Winkel errechnet worden. Mit dem Winkel- Beta und dem größten Fahrdrahttypen (Ri120mm2) ist es möglich, die maximalen Messgrenzen bei einer 20%igen (30%igen) schrägen Abnutzung zu bestimmen. Dies ermöglicht es, bei der Erstellung eines erfindungsgemäßen Messkreuzes die möglichen Grenzen einzuschätzen.

Das Messkreuz zur Ermittlung von hx:

Da die Grenzen nun bekannt sind und die Ermittlung von FpS sich aus dem Messverfahren ergibt, muss nun eine Möglichkeit für die gesuchte Höhe (hx) geschaffen werden. Für die Ermittlung der Höhe (hx) wurde ein spezielles Messkreuz erstellt, welches in der Lage ist, die Laserbeugung bei einer schrägen Abnutzung zu bestimmen.

(Figur 5)

Besitzt der Linienlaserstrahl bei der geraden Messung eine Steigung, welche über die 0,2 mm Übergangsbegrenzungslinien (4c) ansteigt, dann wird das erfindungsgemäße Messkreuz (5) angewendet.
Der Beginn der linear ansteigenden Laserlinie wird auf den Nullpunkt (5a) des Messkreuzes (5) justiert. Anschließend lässt sich die tatsächliche Höhe (hx) und der gemessene Fahrdrahtspiegel bei einer geraden Messung (FpS) ablesen. Darauf folgend werden die gemessenen Werte in die nachfolgende Formel eingesetzt, um die tatsächliche Fahrdraht-

stärke zu ermitteln:

$$D_{Rest} = r + 0,5 \sqrt{4r^2 - \left(\sqrt{FpS^2 + hx^2} + hx\right)^2}$$

Das Messgestell:

Das Messgestell 16 weist einen Unterbau mit Rädern 17 auf, die an der Messplatte 14 befestigt sind. Damit kann das Messgestell 16 an jeder Stelle auf das Gleis aufgesetzt und zur Vermessung des Fahrdrahtes 1 verwendet werden.

(Figur 6)

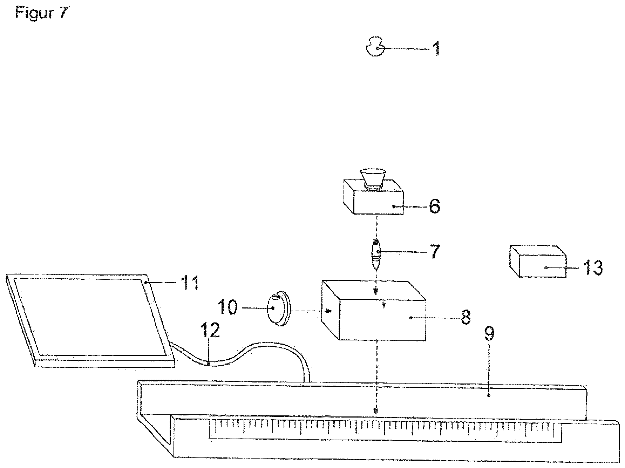

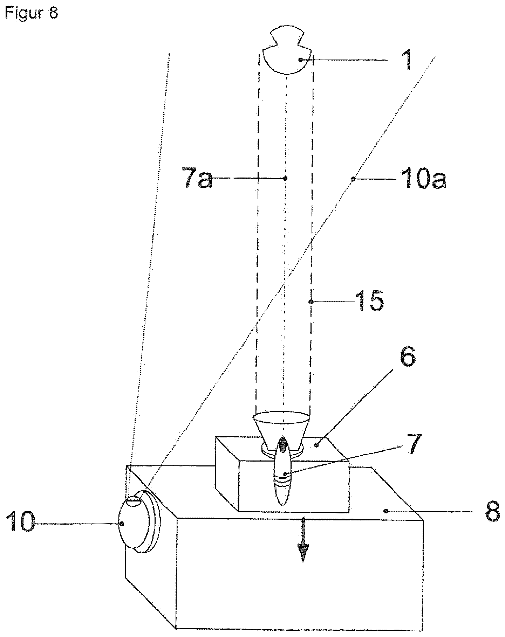

Die erfasste Abnutzungsfläche wird optisch durch die Teleobjektivkamera 6 erfasst und das aufgenommene Bild wird auf die Auswerteeinheit 11 übertragen.
Dort ist es möglich mit der elektronisch hinterlegten M- Schablone 4 die Auswertung durchzuführen.
Auf der Messplatte 14 ist eine Gleislotschiene mit Messskale 9 aufgesetzt, in der der Vermessungsschlitten 8 mit Markierungen beweglich angeordnet ist. Der Vermessungsschlitten 8 weist einen Höhenvermessungslaser 7, einen seitlich angeordneten Linienlaser 10 und eine Teleobjektivkamera 6 auf, wobei die Teleobjektivkamera 6 direkt unterhalb des Fahrdrahtes 1 und der Höhenvermessungslaser 7 angeordnet werden (Figuren 7/8). Der Vermessungsschlitten 8 ist ferner über eine Anschlussleitung 12 mit einer Auswerteeinheit 11 verbunden, die in Form eines Flat Screen/Laptops ausge-führt ist.
Auf der Messplatte 14 ist ferner ein GPS-Empfänger/Anzeiger 13 angeordnet. Dieser soll exakt die Messergebnisse der jeweiligen Position im Gleis zuordnen und diese im System zu hinterlegen.

**Liste der verwendeten Bezugszeichen:**

1 - Fahrdraht
2 - Linienlaserstrahl (gerade Reflexion)
3 - Linienlaserstrahl (schräge Reflexion)
4 - Messschablone
4a - Ausschnitt Messschablone
4b - Spiegelflächenbegrenzungslinien
4c - Übergangsbegrenzungslinien
5 - Messkreuz
5a - Nullpunkt vom Messkreuz
6 - Teleobjektivkamera
7 - Höhenvermessungslaser
7a - Höhenlaserstrahl
8 - Vermessungsschlitten mit Markierung
9 - Gleislotschiene
10 - Linienlaser
10a - Linienlaserstrahl
11 - Auswerteeinheit
12 - Anschlussleitung
13 - GPS-Empfänger/Anzeiger
14 - Gestellplatte mit Unterbau
15 - Kamerafokus
16 - Räder

a- waagerechte Abnutzung
b- Abnutzung bei max. Fahrdrahtseitenlage in der Geraden
c- Abnutzung bei max. Fahrdrahtseitenlage im Gleisbogen
Rh - Resthöhe
FH - Fahrdrahthängerklemme

KB - Klemmbereich
AB - Abnutzungsbereich
Abmax - maximal zulässige seitliche Abnutzung
$D_{Rest}$ - restlicher Durchmesser
$D_{Gesamt}$ - gesamter Durchmesser

**Patentansprüche**

1. Verfahren zur optischen Fahrdrahtstärkenmessung einer Oberleitung des Schienenverkehrs, wobei der Fahrdraht in seinem oberen Bereich beidseitig eine Aufnahme für eine Hängerklemme aufweist und in seinem unteren Bereich halbkreisförmig ausgebildet ist sowie einen Abnutzungsbereich im Fahrdrahtspiegel aufweist, dessen Ausprägung gemessen wird, der momentane Durchmesser ($D_{Rest}$) des Fahrdrahtspiegels (S) von der Höhe (h) eines auf den halbkreisförmig ausgeführten unteren Fahrdraht bereich bezogenen gleichschenkligen Dreiecks sowie vom Radius (r) des Fahrdrahtes abhängig ist, wobei

$$D_{Rest} = r + 0,5\sqrt{4r^2 - S^2}$$

gilt, und senkrecht unter dem Fahrdraht eine Kamera mit einem oder mehreren Laser(n) angeordnet wird, sodass der tatsächliche Abnutzungsgrad der Fahrdrahtspiegelfläche ermittelt wird,
***gekennzeichnet dadurch, dass***
auf der Basis dieser Abhängigkeit eine in Schritten aufgebaute Tabelle erstellt wird, welche die Basis für eine auf jeden Fahrdrahttypen bezogene Messschablone darstellt, welche es gestattet, bei einer Verringerung des Gesamtdurchmessers (D) des Fahrdrahtes (1) eine dazugehörige Linienlänge abzulesen, wobei die Messschablone als lineare Führungsgröße den Fahrdrahtspiegel (S) aufweist und durch ein Verbinden der Enden der Linien eine Gerade mit definierter Steigung entsteht, die dupliziert und gespiegelt wird, sodass in der Messschablone ein dreieckförmiger Bereich gebildet wird, der als zulässiger Messbereich digital auf eine vergrößerte Messaufnahme gelegt wirdwobei der tatsächliche Abnutzungsgrad der Fahrdrahtspiegelfläche mit einem zulässigen Wert verglichen sowie ausgewertet wird.

2. Verfahren nach Anspruch 1, ***gekennzeichnet dadurch, dass*** als zulässiger Wert der Abnutzung des Fahrdrahtspiegels ein Wert von 20% eingestellt wird.

3. Verfahren nach Anspruch 1, ***gekennzeichnet dadurch, dass*** die eingesetzte Laser(10)-Kamera (6) mit einem Gleislot (9) kombiniert wird, welches die Ausrichtung der Laser(10)-Kamera (6) gewährleistet und zur Überprüfung der Seitenlage eingesetzt wird.

4. Verfahren nach Anspruch 1 bis 3, ***gekennzeichnet dadurch, dass*** zusätzlich zur Laser-Vermessung des Fahrdrahtes (1) und zur Seitenlagemessung die Fahrdrahthöhe mittels eines Vermessungslasers (7) gemessen wird.

5. Verfahren nach Anspruch 1 bis 4, ***gekennzeichnet dadurch, dass*** die die Laser(10)-Kamera (6), die Auswerteeinheit (11) und das Gleislot (9) auf einem Gestell (16) moniert werden.

6. Verfahren nach Anspruch 1 und 5, ***gekennzeichnet dadurch, dass*** die Auswerteinheit (11) mit einem GPS-Empfänger (13) und einem Auswertebildschirm (12) verbunden wird.

7. Verfahren nach Anspruch 1, 5 und 6, ***gekennzeichnet dadurch, dass*** das das Gestell (16) schienenfahrbar ausgeführt wird.

8. Verfahren nach Anspruch 1 bis 7, ***gekennzeichnet dadurch, dass*** die Ermittlung einer schrägen Fahrdrahtspiegelfläche mittels der Beziehung

$$D_{Rest} = r + 0,5\sqrt{4r^2 - \left(\sqrt{FpS^2 + hx^2} + hx\right)^2}$$

durchgeführt wird, wobei

> r - Radius des Fahrdrahtes
> FpS - gemessener Fahrdrahtspiegel bei einer geraden Abnutzung
> hx - gesuchte Steigung der realen Abnutzungsfläche bedeuten.

**9.** Verfahren nach Anspruch 1 bis 8, *gekennzeichnet dadurch, dass* die Ermittlung der gesuchten Höhe hx mittels einer Messkreuzschablone (5) durchgeführt wird.

**10.** Verfahren nach Anspruch 1 bis 9, *gekennzeichnet dadurch, dass* zur Messung einer schrägen Abnutzung des Fahrdrahtspiegels der Fahrdraht (1) verdreht und dann vermessen sowie anschließend unter Verwendung der Erweiterung durch die Messkreuzschablone ausgewertet wird.

**11.** Verfahren nach Anspruch 1 bis 10, *gekennzeichnet dadurch, dass* bei einer Abweichung von mehr als 1% vom Durchmesser oder bei einem Blickwinkel von > 20° und einer Steigung von hx von max. 0,2 mm die Messkreuzschablone (5) für die Messung verwendet wird.

**12.** Verfahren nach Anspruch 1 und 3, *gekennzeichnet dadurch, dass* durch den eingesetzten Laser (10) eine Laserlinie auf dem Abnutzungsbereich des Fahrdrahtes (1) erzeugt und er dadurch als optische Unterstützung zur Messschablone verwendet wird.

**13.** Verfahren nach Anspruch 1 und 3, *gekennzeichnet dadurch, dass* die eingesetzten Laservorrichtungen (7; 10), sowie die eingesetzte Kamera (6) auf einen zum Gleislot (9) angepassten Vermessungsschlitten (8) montiert werden.

**Claims**

**1.** A method for optically measuring overhead wire thickness of a rail transport overhead line, wherein the overhead wire has a mount for a hanger clamp on both sides in the upper region thereof and is of semi-circular construction in the lower region thereof, and also has a wear region in at the overhead-wire level, the shape of which is measured, the current diameter ($D_{res}$) of the overhead wire level (S) is dependent on the height (h) of a triangle, which is isosceles with respect to the lower overhead wire region, which is of semi-circular construction, and on the radius (r) of the overhead wire, wherein

$$D_{res} = r + 0{,}5\sqrt{4r^2 - S^2}$$

applies, and a camera with one or more laser (s) is arranged vertically below the overhead wire, so that the actual degree of wear of the overhead wire level surface is determined,
**characterized in that**
a table, which is assembled in stages, is created, which table constitutes the basis for a measuring template based on each overhead wire type, which measuring template makes it possible, in the event of a reduction of the total diameter (D) of the overhead wire (1), to read off an associated line length, wherein the measuring template has the overhead wire level (S) as a linear reference variable, and by connecting the ends of the lines, a straight line with a defined gradient is created, which is duplicated and mirrored, so that a triangular area is formed in the measuring template, which is laid as a permitted measurement range onto an enlarged measuring image, wherein the actual degree of wear of the overhead wire level surface is compared with a permitted value and evaluated.

**2.** The method according to Claim 1, **characterized in that** a value of 20% is set as permitted value of the wear of the overhead wire level.

**3.** The method according to Claim 1, **characterized in that** the laser (10) camera (6) used is combined with a track plumb (9), which ensures the alignment of the laser (10) camera (6) and is used for checking the lateral position.

**4.** The method according to Claims 1 to 3, **characterized in that** in addition to the laser measurement of the overhead wire (1) and the lateral position measurement, the overhead wire height is measured by means of a measuring laser (7).

**5.** The method according to Claims 1 to 4, **characterized in that** the laser (10) camera (6), the evaluation unit (11) and the track plumb (9) are mounted on a framework (16).

**6.** The method according to Claims 1 and 5, **characterized in that** the evaluation unit (11) is connected to a GPS receiver (13) and an evaluation screen (12).

**7.** The method according to Claims 1, 5 and 6, **characterized in that** the framework (16) is realized such that it can be moved on rails.

**8.** The method according to Claims 1 to 7, **characterized in that** the determination of a slanted overhead-wire level surface is carried out by means of the relationship ' ;

$$D_{res} = r + 0{,}5\sqrt{4r^2 - (\sqrt{FpS^2 + hx^2} + hx)^2}$$

wherein

r - represents the radius of the overhead wire
FpS - represents the measured overhead wire level in the case of straight wear
hx - represents the sought after gradient of the real wear surface.

**9.** The method according to Claims 1 to 8, **characterized in that** the determination of the sought after height hx is carried out by means of a measuring template (5).

**10.** The method according to Claims 1 to 9, **characterized in that**, to measure a slanted wear of the overhead wire level, the overhead wire (1) is twisted and then measured and subsequently evaluated using extension by means of the measuring template.

**11.** The method according to Claims 1 to 10, **characterized in that**, in the case of a deviation of more than 1% from the diameter or in the case of a viewing angle of > 20° and a gradient of hx of at most 0.2 mm, the measuring template (5) is used for the measurement.

**12.** The method according to Claims 1 and 3, **characterized in that** a laser line is generated on the wear region of the overhead wire (1) by means of the laser (10) used and, as a result, the laser is used as optical support for the measuring template.

**13.** The method according to Claims 1 and 3; **characterized in that** the laser devices (7; 10) used and the camera (6) used are mounted on a measuring carriage (8), which is adapted for the track plumb (9).

**Revendications**

**1.** Procédé pour la mesure optique de l'épaisseur du fil de contact d'une ligne de contact aérienne du trafic ferroviaire, dans lequel le fil de contact présente, dans sa zone supérieure, des deux côtés, un logement pour un cavalier et est réalisé de forme semi-circulaire dans sa zone inférieure ainsi que présente une zone d'usure dans la surface de frottement du fil de contact dont l'empreinte est mesurée, le diamètre actuel ($D_{Rest}$) de la surface de frottement du fil de contact (S) dépend de la hauteur (h) d'un triangle isocèle rapporté à la zone de fil de contact inférieure réalisée en forme semi-circulaire ainsi que du rayon (r) du fil de contact, avec

$$D_{res} = r + 0{,}5\sqrt{4r^2 - S^2}$$

et une caméra avec un ou plusieurs laser(s) est disposée perpendiculairement sous le fil de contact de sorte que le degré d'usure réel de la surface de frottement du fil de contact est déterminé,

**caractérisé en ce que**,

sur la base de cette dépendance, un tableau construit par étapes est élaboré, lequel constitue la base pour un gabarit de mesure en référence à chaque type de fil de contact, lequel permet, en cas de diminution du diamètre global (D) du fil de contact (1), de lire une longueur de ligne associée, dans lequel le gabarit de mesure présente la surface de frottement du fil de contact (S) en tant que grandeur de référence linéaire et en reliant les extrémités des lignes, une droite à pente définie est obtenue, laquelle est dupliquée et est réfléchie en symétrie spéculaire de sorte que dans le gabarit de mesure, une zone en forme de triangle est formée, laquelle est posée numériquement en tant que zone de mesure admissible sur une vue de mesure agrandie, dans lequel le degré d'usure réel de la surface de frottement du fil de contact est comparé avec une valeur admissible, ainsi qu'évalué.

2. Procédé selon la revendication 1, **caractérisé en ce que**, en guise de valeur admissible de l'usure de la surface de frottement du fil de contact, on règle une valeur de 20%.

3. Procédé selon la revendication 1, **caractérisé en ce que** la caméra (6) laser (10) utilisée est combinée avec un plomb de sonde de la voie (9) qui garantit l'orientation de la caméra (6) laser (10) et est utilisé pour la vérification de la position latérale.

4. Procédé selon les revendications 1 à 3, **caractérisé en ce qu'**en plus de la mesure laser du fil de contact (1) et de la mesure de la position latérale, on mesure la hauteur du fil de contact au moyen du laser de mesure (7) .

5. Procédé selon les revendications 1 à 4, **caractérisé en ce que** la caméra (6) laser (10), l'unité d'évaluation (11) et le plomb de sonde de la voie (9) sont montés sur un bâti (16).

6. Procédé selon les revendications 1 et 5, **caractérisé en ce que** l'unité d'évaluation (11) est reliée à un récepteur GPS (13) et un écran d'évaluation (12).

7. Procédé selon les revendications 1, 5 et 6, **caractérisé en ce que** le bâti (16) est réalisé de manière à pouvoir circuler sur des rails.

8. Procédé selon les revendications 1 à 7, **caractérisé en ce que** la détermination d'une surface en biais de la surface de frottement du fil de contact est réalisée grâce au rapport suivant :

$$D_{res} = r + 0{,}5\sqrt{4r^2 - (\sqrt{FpS^2 + hx^2} + hx)^2}$$

dans lequel

r indique le rayon du fil de contact,
FpS indique la surface de frottement du fil de contact mesurée en cas d'usure droite,
hx indique la pente recherchée de la surface d'usure réelle.

9. Procédé selon les revendications 1 à 8, **caractérisé en ce que** la détermination de la hauteur hx recherchée est réalisée au moyen d'un gabarit de croix de mesure (5) .

10. Procédé selon les revendications 1 à 9, **caractérisé en ce que**, pour la mesure d'une usure en biais de la surface de frottement du fil de contact, le fil de contact (1) est tordu et puis est mesuré ainsi qu'ensuite évalué en utilisant l'élargissement grâce au gabarit de croix de mesure.

11. Procédé selon les revendications 1 à 10, **caractérisé en ce qu'**en cas de divergence supérieure à 1% du diamètre ou en cas d'un angle de vue > 20° et d'une pente hx d'un maximum de 0,2 mm, on utilise le gabarit de croix de mesure (5) pour la mesure.

12. Procédé selon les revendications 1 et 3, **caractérisé en ce que**, grâce au laser (10) utilisé, une ligne laser est générée sur la zone d'usure du fil de contact (1) et que de ce fait, il est utilisé en tant qu'aide optique pour le gabarit de mesure.

**13.** Procédé selon les revendications 1 et 3, **caractérisé en ce que** les dispositifs laser (7; 10) utilisés ainsi que la caméra (6) utilisée sont montés sur un chariot de mesure (8) adapté au plomb de sonde de la voie (9).

Figur 1

**Figur 2**

Figur 4
(4a)

Figur 5

Figur 4

|  | S |  |  |  |
|---|---|---|---|---|
| — | 8,4 mm | 8,53 mm | 10,28 mm | 11,69 mm |
| ≡ | 8,3 mm | 8,60 mm | 10,33 mm | 11,73 mm |
| ≡ | 8,2 mm | 8,66 mm | 10,38 mm | 11,77 mm |
| ≡ | 8,1 mm | 8,72 mm | 10,43 mm | 11,81 mm |
| ≡ | 8,0 mm | 8,78 mm | 10,47 mm | 11,85 mm |
| ≡ | 7,9 mm | 8,83 mm | 10,52 mm | 11,89 mm |
| ≡ | 7,8 mm | 8,89 mm | 10,56mm | 11,92 mm |
| ≡ | 7,7 mm | 8,94 mm | 10,60 mm | 11,96 mm |
| ≡ | 7,6 mm | 8,99 mm | 10,64 mm | 12,00 mm |
| ≡ | 7,5 mm | 9,05 mm | 10,68 mm | 12,03 mm |
| ≡ | 7,4 mm | 9,09 mm | 10,72 mm | 12,07 mm |
| ≡ | 7,3 mm | 9,14 mm | 10,76 mm | 12,10 mm |
| ≡ | 7,2 mm | 9,19 mm | 10,80 mm | 12,13 mm |
| ≡ | 7,1 mm | 9,24 mm | 10,84 mm | 12,16 mm |
| ≡ | 7,0 mm | 9,28 mm | 10,87 mm | 12,20 mm |
| — | 6,9 mm | 9,32 mm | 10,91 mm | 12,23 mm |

4c

4b

Figur5

Figur 6

Figur 7

Figur 8

**EP 2 999 606 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007063490 A1
- DE 20114200 U1
- DE 19803553 C2
- DE 94024650 U1
- JP 09189523 A
- JP 07280528 A
- WO 2009153526 A2
- JP H09240327 A
- KR 20130034322 A